# EUROPEAN PATENT APPLICATION

(11) **EP 3 611 312 A1**
(43) Date of publication of application: **19.02.2020**
(21) Application number: 18203373.8
(22) Date of filing: 30.10.2018
(51) Int. Cl.: E04F 15/02

(54) **CHAMFERED PLASTIC FLOOR**

(30) Priority: 16.08.2018 CN 201810935971
(71) Applicant: Zhejiang Jingtong Plastics Co., Ltd., 314516 Jiaxing City, Zhejiang (CN)
(72) Inventor: DAI, Huibin, Jiaxing City, Zhejiang 314516 (CN); ZHANG, Zhongfei, Jiaxing City, Zhejiang 314516 (CN); ZHAO, Peidong, Jiaxing City, Zhejiang 314516 (CN)
(74) Representative: Dr. Gassner & Partner mbB

(57) **Abstract**

The invention discloses a chamfered plastic floor The chamfered plastic floor is formed by splicing a plurality of substrates, wherein at least one side edge of an upper surface of each substrate is provided with a surface descending portion;; the surface descending portion is disposed along a length direction of the edge of the substrate; adjacent substrates are spliced at the surface descending portions to form a boundary area, and a surface of the boundary area is covered with an antifouling layer. The invention provides a chamfered plastic floor which not only can present the boundaries between adjacent floors, but also facilitates the cleaning of the boundary areas between adjacent floors.

## Description

### Technical Field

The invention relates to the technical field of floors, in particular to a chamfered plastic floor.

### Background Art

Plastic floors are also called PVC floors, and the main component thereof is PVC. Plastic floor, also called "light-weight floor material", is a novel light-weight floor decoration material which is very popular across the world today, and is a popular product in Europe, America as well as Japan and South Korea in Asia. Chamfered plastic floor has been widely accepted and used in various fields, such as homes, hospitals, schools, office buildings, factories, public places, supermarkets, commercial place and stadiums.

Existing plastic floors generally present a continuous and complete pattern after assembly, and there is no obvious boundary between adjacent floors. However, different consumers have different aesthetic requirements. In order to enhance the stereoscopic impression after assembly, the edges of the floors are chamfered or grooved, allowing obvious separation region between adjacent floors. But at the same time, slots which easily cause accumulation of dust and other things are also formed between adjacent floors, causing great trouble to daily cleaning.

### Summary of the Invention

The object of the invention is to provide a chamfered plastic floor which not only can present the boundaries between adjacent floors, but also facilitates the cleaning of the boundary areas between adjacent floors.

The above technical object of the invention is achieved by the following technical scheme: a chamfered plastic floor is formed by splicing a plurality of substrates, wherein at least one side edge of the upper surface of each substrate is provided with a surface descending portion; the surface descending portion is disposed along the length direction of the edge of the substrate; adjacent substrates are spliced at the surface descending portions to form a boundary area; the surface descending portions of the adjacent substrates together constitute a surface of the boundary area.

By adopting the above technical scheme, with the boundary area, gaps or slots will be formed between adjacent floors after assembly, and the adhesion of excessive dust to the boundary area can be avoided by using the antifouling layer. The boundary area can be protected and cleaned conveniently by the antifouling layer. The antifouling layer can also fill the boundary area, and the gaps between adjacent floors after assembly can be complemented, so as to avoid accumulation of sundries or dust in the boundary area or the gaps between adjacent floors, and improve the cleanability of the floors after assembly.

Further, the surface of the boundary area is covered with an antifouling layer; the antifouling layer is a waterproof and oilproof layer formed by coating a waterproof and oilproof agent. By adopting the above technical scheme, dust and oil stains can hardly adhere to the boundary area, the boundary area can be conveniently cleaned by the waterproof and oilproof properties, things can be easily removed from the boundary area, and the situation that moisture or impurities permeate into the base substrate due to the presence of the boundary area is avoided. The floors can be protected and the boundary area can be conveniently cleaned.

Further, the antifouling layer is made of a plastic strip, the plastic strip is filled in the boundary area, and the upper surface of the plastic strip is as high as or lower than the upper surface of the substrate.

By adopting the above technical scheme, the filling of the plastic strip in the boundary area can protect the boundary area, prevent dust and impurities from falling into the boundary area during use, and also obviously differentiate adjacent floors, so as to achieve a better stereoscopic impression. The filling of the plastic strip can also provide better protection for the side edges of the boundary area and prevent the edges of the base substrate from being damaged during use.

Further, the plastic strip is glued to or embedded in the boundary area.

By adopting the above technical scheme, the bonding strength between the plastic strip and the boundary area can be improved through gluing, thereby avoiding the separation of the plastic strip and the boundary area during use. The embedding method can facilitate the installation of the plastic strip and the replacement of the plastic strip, and allow the plastic strip to be cleaned.

Further, the surface descending portion has a shape of straight edge chamfering or arc chamfering.

By adopting the above technical scheme, different chamfers can be formed on the boundary area according to different actual use conditions, thus presenting a better decorative effect and a better stereoscopic impression, and the chamfer processing method is relatively simple in the forming process.

Further, the boundary area is in the shape of a groove.

By adopting the above technical scheme, using the groove-shaped interfacial area can improve the stereoscopic impression of adjacent floors after assembly and present a better the demarcation, and can also imitate an actual grouting line.

Further, the edge where the substrate intersects the surface descending portion is provided with a chamfer.

By adopting the above technical scheme, since sharp corners can be generated at the edges of the substrate after the boundary area is disposed, the chamfer can protect the edges of the substrate and effectively prevent the edges from being damaged during use, and at the same time, dust and impurities in the boundary area can be removed more conveniently.

Further, the width of the boundary area is 1 mm to 2 mm, the chamfering angle is 15 degrees to 60 degrees, and the depth of the boundary area is 0.5 mm to 1 mm.

By adopting the above technical scheme, the stereoscopic impression of the boundary area is stronger, the size of the boundary area is more suitable for floor assembly, and the chamfer with the angle can facilitate the cleaning of the boundary area.

Further, two opposite sides of the substrate are respectively provided with a locking tab and a locking groove which can be occluded together.

By adopting the above technical scheme, the floor can be a floor with a lock catch, and the floors can be assembled conveniently by means of the locking tabs and the locking grooves of adjacent floors.

Further, the substrate is selected from the any one of LVT, SPC, WPC and ESPC.

By adopting the above technical scheme, there are more diversified choices for the substrate, different forms of substrates can present a good stereoscopic impression on the surface thereof, various chamfered plastic floors can be partitioned by means of the boundary area during assembly, and by imitating a grouting line, a better visual effect is achieved; meanwhile, the antifouling layer can cover the surfaces of different layers formed after chamfering, so as to avoid making a difference from different colors and different materials in the boundary area. Because in the actual production process, if a floor is to be chamfered, the surfaces of different layers may be exposed, and if it is desired to show the color of only one material, it may be necessary to thicken a wear-resistant layer on the surface of the floor, which can increase the cost accordingly. However, by coating the antifouling layer, the thickness of the wear-resistant layer can be reduced, thus reducing the production cost, and at the same time, the surfaces of different layers can be covered so as to produce a better visual effect.

In summary, the invention has the following beneficial effects:
firstly, the antifouling layer coated on the surface of the boundary area can well protect the boundary area, and at the same time prevent dust from adhering to the boundary area, therefore impurities and dust can be removed from the surface of the boundary area more conveniently during cleaning;
secondly, the boundary area can be filled with the plastic strip, so that the edges of the boundary area can be well protected and accumulation of excessive impurities and dust in the boundary area can be avoided; and
thirdly, the antifouling layer coated on the surface of the boundary area enables the surface of the substrate after chamfering to present the same pattern or color, so as to prevent the situation that the structures of different materials are exposed from the surface layer to affect the actual visual effect, and accordingly the thickness of the wear-resistant layer is reduced, so that the cost is reduced.

### Brief Description of the Drawings

Fig. 1 is a schematic cross-sectional view of a substrate of Embodiment 1;
Fig. 2 is a schematic cross-sectional view of an arc-chamfered substrate of Embodiment 1;
Fig. 3 is a schematic cross-sectional view of Embodiment 2;
Fig. 4 is a schematic cross-sectional view of Embodiment 3;
Fig. 5 is a schematic cross-sectional view of Embodiment 4;
Fig. 6 is a schematic cross-sectional view of two spliced substrates of Embodiment 5;
Fig. 7 is a schematic cross-sectional view of Embodiment 6;
Fig. 8 is a schematic cross-sectional view of Embodiment 7;
Fig. 9 is a schematic cross-sectional view of Embodiment 8.

### Detailed Description of the Invention

The invention will be described in further detail below with reference to the accompanying drawings.

### Embodiment 1

A chamfered plastic floor is formed by splicing a plurality of substrates 1, wherein at least one side edge of the upper surface of each substrate 1 is provided with a surface descending portion 11; the surface descending portion 11 is disposed along the length direction of the edge of the substrate; adjacent substrates 1 are spliced at the surface descending portions 11 to form a boundary area 10; the surface descending portions 11 of the adjacent substrates 1 together constitute the surface of the boundary area 10; and the surface of the boundary area 10 is covered with an antifouling layer 2.

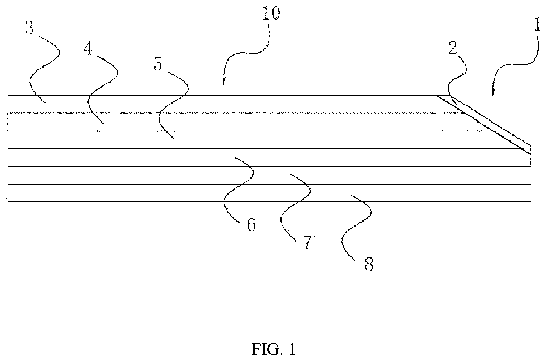

As shown in Fig. 1, the chamfered plastic floor comprises substrates 1, wherein each substrate 1 is made of a plastic material, and the substrate 1 has a rectangular shape which is a common floor shape, but is not limited to this shape and can also be in a parallelogram shape, a polygonal shape or other shapes.

In the actual production process, the four edges of the substrate 2 are all provided with the surface descending portions 11, or three or two edges can be selected to be provided with the surface descending portions 11, so as to generate obvious boundaries between adjacent floors in the actual assembly process by the surface descending portions 11, enhance the overall stereoscopic impression, and at the same time imitate a grouting line to achieve a better visual effect.

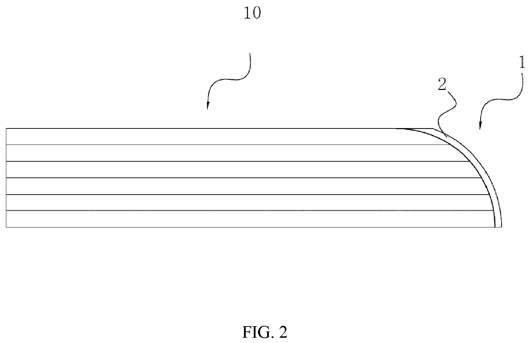

The surface descending portion 11 is actually obtained by chamfering the edge of the substrate 1. As shown in Figs. 1 and 2, the chamfering is straight edge chamfering or arc chamfering, and the chamfering is carried out from the upper surface to the lower surface of the substrate 1, so that the surface of the boundary area 10 is lower than the upper surface of the substrate 1.

Since the boundary area 10 is lower than the substrate 1, grooves can be formed between adjacent floors after assembly. In order to facilitate the cleaning of the grooves formed between adjacent floors, the surface of the boundary area 10 is coated with an antifouling layer 2, the antifouling layer 2 covers the upper surface of the boundary area 10, the antifouling layer 2 can be a waterproof and oilproof layer formed by coating a waterproof and oilproof agent, and ZJ-6120 environment-friendly oily waterproof agent is selected as the waterproof and oilproof agent. With coating the antifouling layer 2, oil stains and impurities can hardly adhere to the surface of the boundary area 10, and the cleaning can become more convenient, and impurities and dust can be removed from the surface of the boundary area 10 simply by flushing with water.

The chamfered plastic floor of the embodiment is a floor without a lock catch, the side wall of the substrate 1 is not provided with a lock catch, and after assembly, the side walls of the adjacent substrates 1 are bonded to each other.

The substrate 1 is a LVT of the chamfered plastic floor. The substrate 1 comprises a wear-resistant layer 3, a color film layer 4, a first inlay layer 5, a glass fiber layer 6, a second inlay layer 7 and a primer layer 8 which are sequentially disposed from top to bottom. The wear-resistant layer 3 and the color film layer 4 are both made of a PVC material. The first and second inlay layers 5 and 7 as well as the primer layer 8 are also mainly made of a PVC material. According to actual needs, the glass fiber layer 6 can be removed. The various layers are formed by hot pressing.

### Embodiment 2

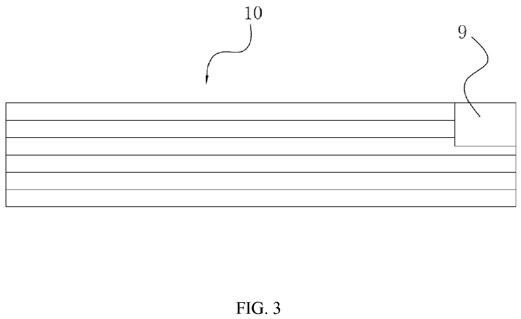

A chamfered plastic floor is different from Embodiment 1 in that, as shown in Fig. 3, a plastic strip 9 is filled in the boundary area 10, the plastic strip 9 is also made of a PVC material, and the shape of the plastic strip 9 is matched with the shape of the boundary area 10. When the plastic strip 9 is embedded in the boundary area 10, the plastic strip 9 is occluded into the boundary area 10, the upper surface of the plastic strip 9 is closely attached to the surface of the boundary area 10, and the upper surface of the plastic strip 9 is as high as the upper surface of the substrate 1 or lower than the substrate 1. The plastic strip 9 and the boundary area 10 can be connected in an embedding mode or a gluing mode.

### Embodiment 3

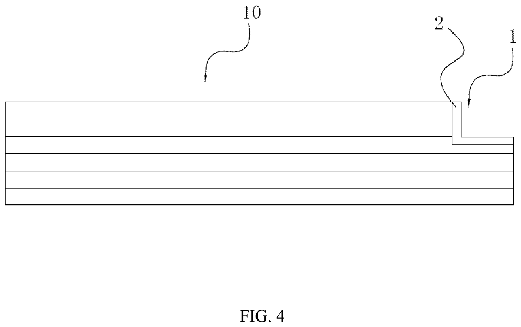

A chamfered plastic floor is different from Embodiment 1 in that, as shown in Fig. 4, the boundary area 10 is in the shape of a groove which is concave downward. The boundary area 10 is formed by cutting out part of the material of the substrate 1 from the upper surface of the substrate 1 downwards. The width of the boundary area 10 is 1 mm to 2 mm, and the depth of the boundary area 10 is 0.5 mm to 1 mm.

The surface of the boundary area 10 may be coated with an antifouling layer 2, or a plastic strip 9 may be occluded into the boundary area 10 to realize antifouling and easy cleaning of the boundary area 10.

### Embodiment 4

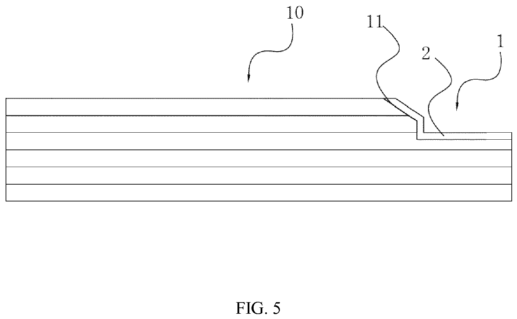

A chamfered plastic floor is different from Embodiment 3 in that, as shown in Fig. 5, the edge where the substrate 1 intersects the boundary area 10 is provided with a chamfer 16, and the chamfer 16 can be a straight edge chamfer or an arc chamfer, so that the edge of the boundary area 10 can be well protected after floor assembly. Since the chamfer 16 will show the structures of different layers in the substrate 1, the antifouling layer 2 coated on the surface of the boundary area 10 or the plastic strip 9 directly embedded in the boundary area 10 can cover the structures of different layers at this time, and can also facilitate the cleaning of the boundary area 10. The angle of the chamfer is 15 degrees to 60 degrees.

### Embodiment 5

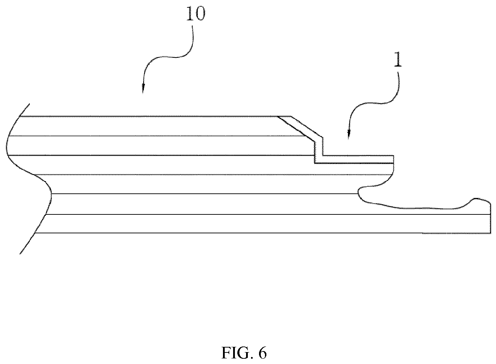

A chamfered plastic floor is different from Embodiment 3 in that, as shown in Fig. 6, the embodiment is a floor with a lock catch, and two opposite sides of the substrate 1 are respectively integrally with a locking tab 17 and a locking groove 18 which can be occluded together. The shape of the locking tab 17 and the locking groove 18 can be selected from commonly used structures in the market. Both the locking tab 17 and the locking groove 18 are located below the boundary area 10.

The surface descending portions 11 of two substrates 1 to be spliced can be the same or different in structure. In actual laying process, the edge of the substrate 1 against the wall is cut off so that the sidewall of the substrate is matched with the wall.

### Embodiment 6

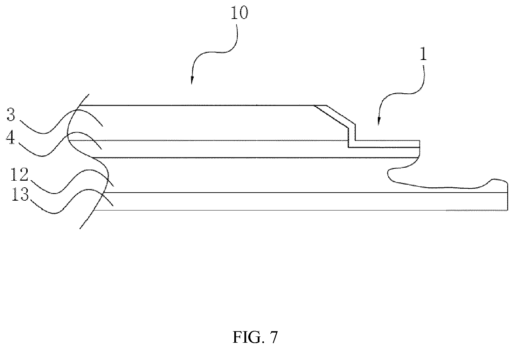

A chamfered plastic floor is different from Embodiment 1 in that, as shown in Fig. 7, the substrate 1 is SPC, and SPC comprises a wear-resistant layer 3, a color film layer 4, an SPC base material layer 12 and a bottom layer 13 which are sequentially disposed from top to bottom. The wear-resistant layer 3 and the color film layer 4 are both made of a PVC material, the SPC base material layer 12 is mainly made of a PVC material, and the bottom layer 13 can be cork or IXPE. The wear-resistant layer 3, the color film layer 4 and the SPC base material layer 12 are formed through one-time extrusion, and the bottom layer 13 and the SPC base material layer 12 are glued together.

### Embodiment 7

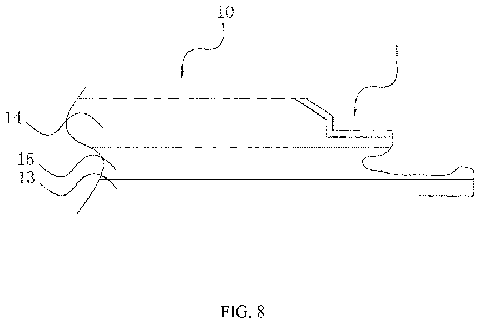

A chamfered plastic floor is different from Embodiment 1 in that, as shown in Fig. 8, the substrate 1 is WPC, and the WPC comprises an LVT surface layer 14, a WPC base material layer 15 and a bottom layer 13 which are sequentially disposed from top to bottom and are glued together. The bottom layer 13 can be cork or IXPE, and the LVT surface layer 14 comprises a wear-resistant layer 3, a color film layer 4 and a first inlay layer 5 which are sequentially disposed from top to bottom and are combined through hot pressing. The WPC base material layer 15 is mainly made of a PVC material through foaming.

### Embodiment 8

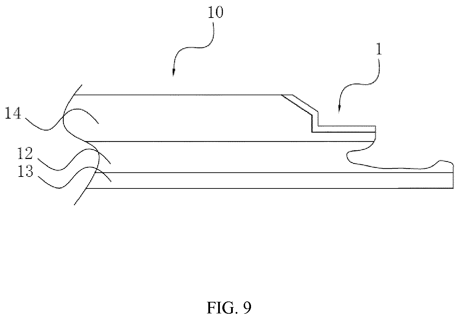

A chamfered plastic floor is different from Embodiment 1 in that, as shown in Fig. 9, the substrate 1 is ESPC, and the ESPC comprises an LVT surface layer 14, an SPC base material layer 15 and a bottom layer 13 which are sequentially disposed from top to bottom. The bottom layer 13 can be selected from IXPE and cork. The LVT surface layer 14 has the same structure as that in Embodiment 7. The SPC base material layer 12 has the same structure as that in Embodiment 6.

The specific embodiments are only an explanation of the invention, and are not a limitation of the invention. After reading the specification, a person skilled in the art can make modifications to the embodiments without creative contribution as needed, but they are protected by the patent law as long as they are within the scope of the claims of the invention.

## Claims

1. A chamfered plastic floor, formed by splicing a plurality of substrates, wherein at least one side edge of an upper surface of each substrate is provided with a surface descending portion; the surface descending portion is disposed along a length direction of the edge of the substrate; adjacent substrates are spliced at the surface descending portions to form a boundary area; the surface descending portions of the adjacent substrates together constitute a surface of the boundary area.

2. The chamfered plastic floor according to claim 1, wherein the surface of the boundary area is covered with an antifouling layer; the antifouling layer is a waterproof and oilproof layer formed by coating a waterproof and oilproof agent.

3. The chamfered plastic floor according to claim 2, wherein the antifouling layer is made of a plastic strip, the plastic strip is filled in the boundary area, and an upper surface of the plastic strip is as high as or lower than the upper surface of the substrate.

4. The chamfered plastic floor according to claim 3, wherein the plastic strip is glued to or embedded in the boundary area.

5. The chamfered plastic floor according to claim 1, wherein the surface descending portion has a shape of straight edge chamfering or arc chamfering.

6. The chamfered plastic floor according to claim 2, wherein the surface descending portion has a shape of straight edge chamfering or arc chamfering.

7. The chamfered plastic floor according to claim 1, wherein the boundary area is in the shape of a groove.

8. The chamfered plastic floor according to claim 2, wherein the boundary area is in the shape of a groove.

9. The chamfered plastic floor according to claim 7, wherein an edge where the substrate intersects the surface descending portion is provided with a chamfer.

10. The chamfered plastic floor according to claim 8, wherein an edge where the substrate intersects the surface descending portion is provided with a chamfer.

11. The chamfered plastic floor according to claim 9, wherein a width of the boundary area is 1 mm to 2 mm, a chamfering angle is 15 degrees to 60 degrees, and a depth of the boundary area is 0.5 mm to 1 mm.

12. The chamfered plastic floor according to claim 10, wherein a width of the boundary area is 1 mm to 2 mm, a chamfering angle is 15 degrees to 60 degrees, and a depth of the boundary area is 0.5 mm to 1 mm.

13. The chamfered plastic floor according to claim 1, wherein two opposite sides of the substrate are respectively provided with a locking tab and a locking groove which can be occluded together.

14. The chamfered plastic floor according to claim 1, wherein the substrate is selected from the any one of LVT, SPC, WPC and ESPC.
